# EUROPEAN PATENT APPLICATION

(11) **EP 4 757 361 A1**
(43) Date of publication of application: **10.06.2026**
(21) Application number: 24848066.7
(22) Date of filing: 22.07.2024
(51) Int. Cl.: H04W 4/80, H04B 5/00, H04W 72/04

(54) **DATA TRANSMISSION METHOD, APPARATUS AND DEVICE**

(30) Priority: 28.07.2023 CN 202310941682
(71) Applicant: Vivo Mobile Communication Co., Ltd., Dongguan, Guangdong 523863 (CN)
(72) Inventor: WANG, Lihui, Dongguan, Guangdong 523863 (CN); LI, Dongru, Dongguan, Guangdong 523863 (CN)
(74) Representative: Walaski, Jan Filip
(86) International application number: PCT/CN2024/106697
(87) International publication number: WO 2025/026108

(57) **Abstract**

The present application belongs to the technical field of communications. Disclosed are data transmission methods, an apparatus and a device. A data transmission method in the embodiments of the present application comprises : a first device receiving a first signaling, the first signaling being used for triggering DO-DTT, or the first signaling carrying DT data; and the first device sending a second signaling, wherein the second signaling satisfies at least one of the following : the time of sending the second signaling is the time indicated by the first signaling, or the time delayed by a first backoff time; the second signaling comprises DO-DTT data; and the second signaling comprises feedback on the first DT data.

## Description

### CROSS-REFERENCE TO RELATED APPLICATIONS

This application claims priority to Chinese Patent Application No. 202310941682.5, filed with the China National Intellectual Property Administration on July 28, 2023, which is incorporated herein by reference in its entirety.

### TECHNICAL FIELD

This application pertains to the field of communication technology, and specifically relates to a data transmission method and apparatus, and a device.

### BACKGROUND

Some mobile communication systems support internet of things (Internet of Things, IoT) technology, for example, supporting ambient IoT (Ambient IoT, A-IoT) technology, where A-IoT may also be referred to as zero-power internet of things. IoT technology mainly includes two data types: device-originated (Device-originated, DO) data and device-terminated (Device-terminated, DT) data. DO data transmission further includes device-originated-device-terminated triggered data transmission (Device-originated-device-terminated triggered, DO-DTT). However, in some related technologies, the transmission performance of DO-DTT or DT data transmission is relatively poor.

### SUMMARY

Embodiments of this application provide a data transmission method and apparatus, and a device, so as to solve the problem of relatively poor transmission performance of DO-DTT or DT data transmission.

According to a first aspect, a data transmission method is provided, including:
receiving, by a first device, first signaling, where the first signaling is used to trigger DO-DTT, or the first signaling carries DT data; and
sending, by the first device, second signaling, where the second signaling satisfies at least one of the following:
   a sending time of the second signaling is: a time indicated by the first signaling, or a time obtained after a delay of a first backoff time;
   the second signaling includes DO-DTT data; and
   the second signaling includes feedback on first DT data.

According to a second aspect, a data transmission method is provided, including:
sending, by a second device, first signaling, where the first signaling is used to trigger DO-DTT, or the first signaling carries DT data; and
receiving, by the second device, second signaling, where the second signaling satisfies at least one of the following:
   a sending time of the second signaling is: a time indicated by the first signaling, or a time obtained after a delay of a first backoff time;
   the second signaling includes DO-DTT data; and
   the second signaling includes feedback on first DT data.

According to a third aspect, a data transmission apparatus is provided, including:
a first receiving module configured to receive first signaling, where the first signaling is used to trigger DO-DTT, or the first signaling carries DT data; and
a first sending module configured to send second signaling, where the second signaling satisfies at least one of the following:
   a sending time of the second signaling is: a time indicated by the first signaling, or a time obtained after a delay of a first backoff time;
   the second signaling includes DO-DTT data; and
   the second signaling includes feedback on first DT data.

According to a fourth aspect, a data transmission apparatus is provided, including:
a first sending module configured to send first signaling, where the first signaling is used to trigger DO-DTT, or the first signaling carries DT data; and
a first receiving module configured to receive second signaling, where the second signaling satisfies at least one of the following:
   a sending time of the second signaling is: a time indicated by the first signaling, or a time obtained after a delay of a first backoff time;
   the second signaling includes DO-DTT data; and
   the second signaling includes feedback on first DT data.

According to a fifth aspect, a device is provided, including a processor and a memory, where the memory stores a program or instructions capable of running on the processor, and the program or instructions, when executed by the processor, implement the steps of the data transmission method on a first device side according to the embodiments of this application.

According to a sixth aspect, a device is provided, including a processor and a communication interface, where the communication interface is configured to: receive first signaling, where the first signaling is used to trigger DO-DTT, or the first signaling carries DT data; and send second signaling, where the second signaling satisfies at least one of the following: a sending time of the second signaling is: a time indicated by the first signaling, or a time obtained after a delay of a first backoff time; the second signaling includes DO-DTT data; and the second signaling includes feedback on first DT data.

According to a seventh aspect, a device is provided, including a processor and a memory, where the memory stores a program or instructions capable of running on the processor, and the program or instructions, when executed by the processor, implement the steps of the data transmission method on a second device side according to the embodiments of this application.

According to an eighth aspect, a device is provided, including a processor and a communication interface, where the communication interface is configured to: send first signaling, where the first signaling is used to trigger DO-DTT, or the first signaling carries DT data; and receive second signaling, where the second signaling satisfies at least one of the following: a sending time of the second signaling is: a time indicated by the first signaling, or a time obtained after a delay of a first backoff time; the second signaling includes DO-DTT data; and the second signaling includes feedback on first DT data.

According to a ninth aspect, a readable storage medium is provided, where the readable storage medium stores a program or instructions, and the program or instructions, when executed by a processor, implement the steps of the data transmission method on a first device side according to the embodiments of this application, or implement the steps of the data transmission method on a second device side according to the embodiments of this application.

According to a tenth aspect, a wireless communication system is provided, including: a first device and a second device, where the first device may be configured to perform the steps of the data transmission method on a first device side according to the embodiments of this application, and the second device may be configured to perform the steps of the data transmission method on a second device side according to the embodiments of this application.

According to an eleventh aspect, a chip is provided, where the chip includes a processor and a communication interface, the communication interface is coupled to the processor, and the processor is configured to run a program or instructions to implement the data transmission method on a first device side according to the embodiments of this application, or implement the steps of the data transmission method on a second device side according to the embodiments of this application.

According to a twelfth aspect, a computer program product is provided, where the computer program product is stored in a storage medium, and the computer program product is executed by at least one processor to implement the steps of the data transmission method on a first device side according to the embodiments of this application, or the computer program product is executed by at least one processor to implement the steps of the data transmission method on a second device side according to the embodiments of this application.

In the embodiments of this application, a first device receives first signaling, where the first signaling is used to trigger DO-DTT, or the first signaling carries DT data; and the first device sends second signaling, where the second signaling satisfies at least one of the following: a sending time of the second signaling is: a time indicated by the first signaling, or a time obtained after a delay of a first backoff time; the second signaling includes DO-DTT data; and the second signaling includes feedback on first DT data. In this way, since the sending time of the second signaling is the time indicated by the first signaling or the time obtained after a delay of the first backoff time, conflict of the first signaling can be reduced, thereby improving transmission performance of DO-DTT or DT data transmission. The second signaling includes the DO-DTT data or the second signaling includes the feedback on the first DT data, so that related transmission of the DO-DTT data or the first DT data can be implemented based on the first signaling, thereby improving the transmission performance of DO-DTT or DT data transmission.

### BRIEF DESCRIPTION OF DRAWINGS

FIG. 1 is a block diagram of a wireless communication system to which embodiments of this application are applicable;
FIG. 2 is a diagram of instructions between a reader and a tag according to an embodiment of this application;
FIG. 3 is a flowchart of a data transmission method according to an embodiment of this application;
FIG. 4 is a flowchart of another data transmission method according to an embodiment of this application;
FIG. 5 is a structural diagram of a data transmission apparatus according to an embodiment of this application;
FIG. 6 is a structural diagram of another data transmission apparatus according to an embodiment of this application;
FIG. 7 is a structural diagram of a communication device according to an embodiment of this application;
FIG. 8 is a structural diagram of another communication device according to an embodiment of this application; and
FIG. 9 is a structural diagram of another communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or more first objects. In addition, "or" in this application indicates at least one of the connected objects. For example, "A or B" covers three schemes, that is, scheme 1: including A and not including B; scheme 2: including B and not including A; and scheme 3: including both A and B. The character "/" generally indicates that the associated objects before and after it are in an "or" relationship.

The term "indication" in this application can be either a direct indication (or explicit indication) or an indirect indication (or implicit indication). Direct indication can be understood as the sender explicitly informing the receiver of content such as specific information, operations to be performed, or requested results in the sent indication. Indirect indication can be understood as the receiver determining corresponding information based on the indication sent by the sender, or making judgments and determining operations to be performed, requested results, or the like based on the judgment results.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustration purpose, and NR terms are used in most of the following descriptions, although these technologies may also be applied to other applications than an NR system application, for example, the 6th generation (6^{th} Generation, 6G) communication system.

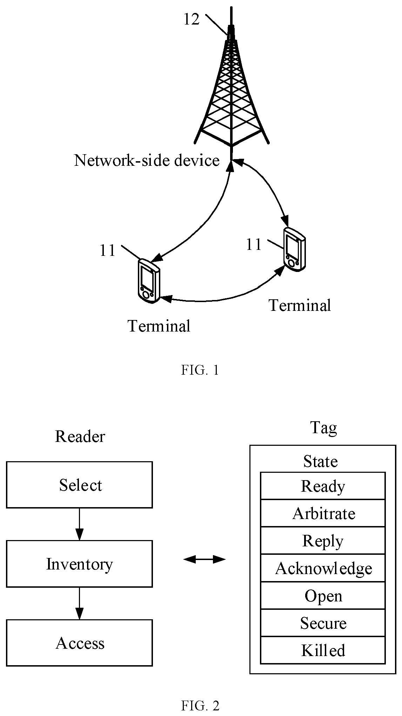

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), smart household (home devices with wireless communication functions, such as refrigerators, televisions, washing machines, or furniture), a game console, a personal computer (Personal Computer, PC), a teller machine, a self-service machine, or an A-IoT device (such as a tag). The wearable device includes a smartwatch, a smart band, smart earphones, smart glasses, smart jewelry (a smart bracelet, a smart band, a smart ring, a smart necklace, a smart leglet, a smart anklet, and the like), a smart wristband, smart clothing, or the like. The vehicle user equipment may also be referred to as an in-vehicle terminal, an in-vehicle controller, an in-vehicle module, an in-vehicle component, an in-vehicle chip, an in-vehicle unit, or the like. It should be noted that the terminal 11 is not limited to a specific type in the embodiments of this application.

The network-side device 12 may include an access network device or a core network device. The access network device may also be referred to as a radio access network (Radio Access Network, RAN), a wireless access network function, or a wireless access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or other suitable terms in the field. Provided that the same technical effect is achieved, the base station is not limited to specific technical terms. It should be noted that in the embodiments of this application, only the base station in the NR system is used as an example for description, but the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that in the embodiments of this application, only the core network device in the NR system is used as an example for description, but the specific type of the core network device is not limited.

A terminal or a network-side device may serve as a reader (reader) of a tag (tag). The tag may be a radio frequency identification (Radio frequency identification, RFID) tag.

FIG. 2 shows information transmission between a reader and a tag. Table 1 lists reader operation instructions.

**Table 1**

| Operation type | Instruction | Function |
|---|---|---|
| Select (Select) | Select (Select) | Select a tag. |
| Inventory (Inventory) | Query (Query) | Start an inventory action. |
| | | Generate a random number to determine response time. |
| | Query Adjust (Query Adjust) | Adjust the original number of slots (Slot) of a tag. |
| | QueryRep (QueryRep) | A tag reduces its slot count. |
| | Evolved Packet Core (Evolved Packet Core, EPC) Reply (acknowledgement (Acknowledgement, ACK)) | An instruction returned by a reader to a tag. |
| | Negative Acknowledgement (Negative Acknowledgement, NACK) | An instruction sent by a reader. |
| | | A tag returns to an arbitrate (Arbitrate) state. |
| Access (Access) | Req_RN (Req_RN) | Require a tag to generate a random number. |
| | Read (Read) | Read data from a location in a tag memory. |
| | Write (Write) | Write data to a tag memory. |
| | Kill (Kill) | No longer respond to any reader. Prevent privacy leakage. |
| | | A tag can no longer be used. |
| | Lock (Lock) | A tag can no longer be written. |
| | | Prevent arbitrary tampering of data. |
| | Access (optional) | When a tag has a password, switch the tag from an open (Open) state to a secure (Secure) state. |
| | BlockWrite (BlockWrite) (optional) | Write into multiple blocks at a time. |
| | Lock Erase (Lock Erase) (optional) | Erase multiple blocks from a single tag memory. |

Table 2 lists tag states.

**Table 2**

| Tag state | Description |
|---|---|
| Ready (Ready) | Not in a current inventory operation. |
| Arbitrate (Arbitrate) | The tag currently belongs to an inventory operation. |
| | The slot count is not yet zero, indicating that the tag is still waiting. |
| Reply (Reply) | Generate a 16-bit random number to a reader. |
| | Enter a reply state upon receiving of an ACK message. |
| | Return to an arbitrate state if no ACK message is received. |
| Acknowledge (Acknowledge) | Enter from this state to any state except a killed state. |
| Open (Open) | Enter this state when a tag with a non-zero password in an acknowledge state receives a Req_RN instruction. |
| Secure (Secure) | Enter this state when a tag with a zero password in an acknowledge state receives a Req_RN instruction from a reader. |
| Killed (Killed) | Permanently unusable. |

It should be noted that Table 1 and Table 2 are only examples of information transmission between a reader and a tag. The embodiments of this application do not specifically limit the information transmission between a reader and a tag.

In some embodiments, an A-IoT device is characterized based on the energy storage capacity and radio frequency signal generation and transmission capability of the A-IoT device. The A-IoT device has one of the following energy storage capacities:
storage capacity 1: no ability to store energy;
storage capacity 2: energy of up to E1 or E2 joules can be stored, where E1 may equal E2; and
storage capacity 3: energy of up to E2 joules can be stored.

Depending on these storage capacities, the following device types may be classified:
device A: has no energy storage, and has no independent signal generation/amplification, that is, backscatter transmission;
device B: has energy storage, but no independent signal generation, that is, backscatter transmission, where stored energy may be used to amplify the reflected signal; and
device C: has energy storage, and has independent signal generation, that is, an active radio frequency component for transmission.

In some implementations, data (or service) types of an A-IoT device include: DO data and DT data.

DO data represents data whose data flow originates from the A-IoT device (similar to an RFID tag), while DT data represents data whose data flow is terminated at the A-IoT device.

For data transmission where the data flow originates from the A-IoT device, that is, DO data transmission, it may be further classified as:
device-originated-access (Device-originated-access, DO-A), that is, the device autonomously initiates data transmission, for example, connecting a large number of various sensors that collect and when necessary, actively report information about the environment, device, and biology; and
DO-DTT, or device-originated-device-terminated triggered data transmission, that is, the reader sends DT data to the tag, the DT is terminated at the tag, and the DT data triggers the tag to initiate DO service. For example, asset identification, status reporting, and tracking are all downlink-triggered reporting, where the reader collects data from the tag by triggering an inventory procedure. Since the data is generated/initiated in the IoT device, the service should be regarded as a DO service initiated by the tag as triggered by a command sent by the reader.

The following describes in detail a data transmission method and apparatus, and a device according to embodiments of this application with reference to the accompanying drawings through some embodiments and application scenarios thereof.

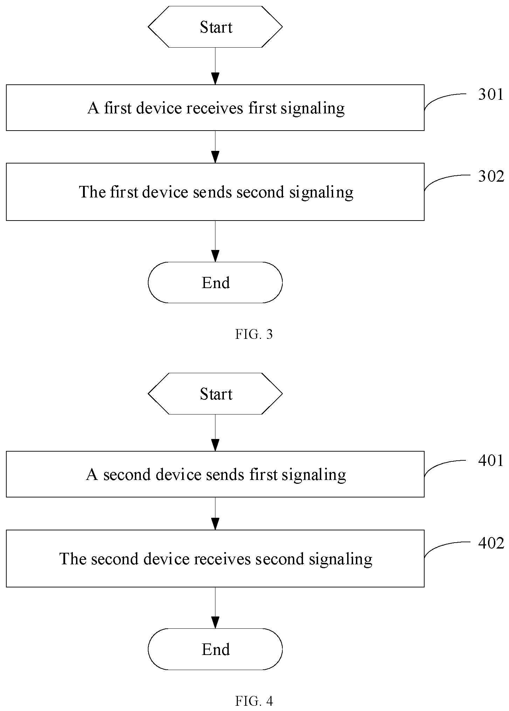

Referring to FIG. 3, FIG. 3 is a flowchart of a data transmission method according to an embodiment of this application. As shown in FIG. 3, the method includes the following steps.

Step 301: A first device receives first signaling, where the first signaling is used to trigger DO-DTT, or the first signaling carries DT data.

The first device may be a terminal, for example, an A-IoT device, such as a tag.

The receiving, by a first device, first signaling may be receiving the first signaling sent by a second device, where the second device may be a terminal or a network-side device, such as a reader of a tag.

The first signaling is used to trigger DO-DTT, meaning that the first signaling may also be referred to as trigger signaling. The triggering DO-DTT may also be referred to as triggering DO-DTT data transmission.

The triggering DO-DTT may be understood as the first device initiating data transmission, for example, an A-IoT device (such as a tag or a device of a tag) initiating data transmission. That the first signaling carries DT data may be understood as the first signaling carrying the DT data. The first device receiving the first signaling means that a data transmission process is terminated by the first device, for example, the data transmission process is terminated by an A-IoT device (such as a tag or a device of a tag).

In the embodiments of this application, data transmission may also be referred to as service transmission, and data may also be referred to as service.

In the embodiments of this application, signaling may also be referred to as a message or information.

Step 302: The first device sends second signaling, where the second signaling satisfies at least one of the following:
a sending time of the second signaling is: a time indicated by the first signaling, or a time obtained after a delay of a first backoff time;
the second signaling includes DO-DTT data; and
the second signaling includes feedback on first DT data.

The sending, by the first device, second signaling is sending, by the first device, the second signaling based on the first signaling, or sending, by the first device, the second signaling in response to the first signaling.

That a sending time of the second signaling is a time indicated by the first signaling means that the sending time of the second signaling is indicated in the first signaling.

The first backoff time may be determined based on the first signaling, or randomly selected by the first device. That a sending time of the second signaling is a time obtained after a delay of a first backoff time may be understood as the first device sending the second signaling after a delay of the first backoff time upon receiving of the first signaling.

The first DT data may be the DT data carried in the first signaling.

In the embodiments of this application, since the sending time of the second signaling is the time indicated by the first signaling or the time obtained after a delay of the first backoff time, conflict of the first signaling can be reduced, specifically conflict of the first signaling among multiple first devices can be reduced, thereby improving the transmission performance of DO-DTT or DT data transmission. The second signaling includes the DO-DTT data or the second signaling includes the feedback on the first DT data, so that related transmission of the DO-DTT data or the first DT data can be implemented based on the first signaling, without requiring excessive signaling interactions between the first device and the second device before the related transmission of the DO-DTT data or the first DT data. For example, there is no need for interaction of the Query (Query) instruction, Reply (Reply) signaling, 16-bit random number, and Acknowledgement (Acknowledgement, ACK) instruction between the first device and the second device before the related transmission of the DO-DTT data or the first DT data, thereby improving the transmission performance of DO-DTT or DT data transmission.

In an optional implementation, the first signaling is used to trigger DO-DTT of one first device, or the first signaling carries DT data of one first device; or
the first signaling is used to trigger DO-DTT of at least one group of first devices, or the first signaling carries DT data of at least one group of first devices; or
the first signaling is used to trigger DO-DTT of all first devices covered by a second device, or the first signaling carries DT data of all first devices covered by the second device, where the second device is a device that sends the first signaling.

In this implementation, the first signaling can trigger DO-DTT of one first device or transmit DT data of one device, so that data transmission between the second device and one first device can be realized, thereby improving the reliability of data transmission. The first signaling can also trigger DO-DTT of at least one group of first devices or all first devices covered by the second device, or transmit DT data of at least one group of first devices or all first devices covered by the second device, thereby reducing transmission overheads.

In an optional implementation, the first signaling indicates the sending time of the second signaling, and the sending time of the second signaling is the time indicated by the first signaling; or
the first signaling indicates a second backoff time, and the sending time of the second signaling is a sending time obtained after a delay of the first backoff time, where the first backoff time includes one of the following:
a backoff time randomly selected between 0 and the second backoff time; and
a backoff time randomly selected between 0 and a first target time, where the first target time is 2^{t1}-1, and t1 represents the second backoff time.

The second backoff time is a target backoff time carried in the first signaling, specifically a backoff indicator (Backoff Indicator, BI).

The backoff time randomly selected between 0 and the second backoff time may be a backoff time randomly selected from a uniform distribution between 0 and the second backoff time.

The backoff time randomly selected between 0 and the first target time may be randomly selecting a value from {0, ..., 2^{t1}-1} as the backoff time.

In the embodiments of this application, the unit of the backoff time may be symbol, slot, sub-slot, subframe, millisecond, microsecond, or the like.

That the sending time of the second signaling is a time obtained after a delay of the first backoff time may be understood as the first device sending the second signaling after a delay of the first backoff time upon receiving of the first signaling.

In this implementation, since the first signaling indicates the sending time of the second signaling or the second backoff time, conflict between the second signaling and other signaling (such as second signaling sent by another first device) can be effectively prevented.

In an optional implementation, a resource for the first device to send the second signaling includes one of the following:
a resource indicated by the first signaling; and
a network-side configured resource, where the network-side configured resource includes: a contention-based resource or a non-contention-based resource.

The resource includes a time domain resource or a frequency domain resource.

The network-side configured resource may be a resource configured by a network side through higher-layer signaling or system information.

The contention-based resource may be a same resource shared by multiple first devices, and the non-contention-based resource may be a resource that is used by one first device and not shared with other first devices. In this way, resource configurations can be reduced through contention-based resources, while reliability of signaling transmission can be improved through non-contention-based resources.

In addition, through contention-based resources or non-contention-based resources, compatibility with 3GPP communication procedures in DO-DTT or DT data transmission can be realized, reducing impact on network devices or other non-A-IoT devices.

In an optional implementation, the second signaling further includes at least one of the following:
a preamble, device identification information, a data amount of the first device, a channel state of the first device, and a battery status of the first device; where
the device identification information includes one of the following:
   device unique identification information, device group identification information, and identification information used to indicate all first devices covered by a second device, where the second device is a device that sends the first signaling.

The preamble is used for synchronization between the first device and the second device or identification of the first device.

The preamble may be a contention-based preamble, namely a preamble shared by multiple first devices, or may be a non-contention-based preamble, meaning that the preamble is used by one first device and is not shared with other first devices.

In some implementations, the second signaling includes a preamble but does not include DO-DTT data. For example, when there are many first devices in one device group or the value of BI is relatively small, transmission conflict is likely to occur, in which case the preamble may be transmitted first to identify the first device, and then DO-DTT data may be scheduled, thereby improving resource utilization efficiency.

The preamble allows for better establishment of a connection between the first device and the second device, thereby improving the reliability of data transmission.

In addition, compatibility with 3GPP communication procedures in DO-DTT or DT data transmission can be realized by sending the preamble, thereby reducing impact on network devices or other non-A-IoT devices.

The device unique identification information may be unique identification information of one first device, and may mean that each first device covered by the second device has a different unique identifier to differentiate between different first devices.

The device group identification information may be a device type or a group of devices satisfying a certain screening condition or satisfying an inventory command, where the device type may include passive IoT (Passive IoT) device, semi-passive IoT (semi-Passive IoT) device, and active IoT (active IoT) device, and the screening condition or satisfying the inventory command may be indicated by the first signaling or obtained in advance.

The device identification information indicating identification information of all first devices covered by the second device may be understood as the first signaling being broadcast signaling (Broadcast signalling), or when a device identification parameter/field in the first signaling indicates "all identified" or no device identification information is indicated in the trigger signaling, it means that the first device that triggers device-originated data is all first devices covered by the second device.

Through the device identification information, the second device can better identify the first device, thereby improving the reliability of data transmission.

The data amount of the first device, the channel state of the first device, and the battery status of the first device may be a current data amount, channel state, and battery status of the first device.

Through the data amount of the first device, the channel state of the first device, and the battery status of the first device, the second device can obtain related information of the first device in a timely manner, allowing the second device to better schedule the first device or trigger data transmission.

In an optional implementation, the first DT data includes one of the following:
in a case that the first signaling triggers DO-DTT, DT data carried in the first signaling and related to the triggering of DO-DTT; and
in a case that the first signaling carries DT data, the DT data carried in the first signaling.

The first DT data may be the DT data carried in the first signaling that is received and demodulated by the first device.

In this implementation, DT data transmission can be performed using the first signaling, so as to improve data transmission efficiency.

Optionally, the first DT data includes one of the following:
unicast DT data, multicast DT data, and broadcast DT data.

The unicast DT data, multicast DT data, and broadcast DT data may be unicast DT data, multicast DT data, and broadcast DT data carried in the first signaling in a case that the first signaling carries DT data; or the unicast DT data, multicast DT data, and broadcast DT data may be unicast DT data, multicast DT data, and broadcast DT data carried in the first signaling and related to the triggering of DO-DTT in a case that the first signaling triggers DO-DTT.

In this implementation, the unicast DT data, multicast DT data, and broadcast DT data can be transmitted through signaling that triggers DO-DTT data transmission or transmits DT data, improving the transmission efficiency of the unicast DT data, multicast DT data, and broadcast DT data.

In an optional implementation, after the first device sends second signaling, the method further includes:
monitoring, by the first device, third signaling within a first time, where the first time includes: a timer running time corresponding to the third signaling, or a time window corresponding to the third signaling;
in a case that the third signaling is not detected within the first time, determining, by the first device, at least one of the following: that connection to the second device fails, that the second signaling is not successfully received by the second device, and that the first device is not identified by the second device; or in a case that the third signaling is detected within the first time, determining, by the first device based on the third signaling, at least one of the following:
   whether the first device is successfully connected to the second device;
   whether the second signaling is successfully received by the second device;
   whether the first device is identified by the second device; and
   where the third signaling is signaling sent by the second device.

In this implementation, after the first device sends the second signaling, a timer or time window corresponding to receiving/monitoring of the third signaling may be started to monitor the third signaling within the first time.

The timer or time window corresponding to the third signaling may be predefined, or configured by higher-layer signaling, or indicated by system information or trigger signaling.

The first device being successfully connected to the second device may be understood as the first device successfully establishing a communication connection to the second device, and the first device failing to be connected to the second device may be understood as the first device failing to establish a communication connection to the second device.

Optionally, the third signaling includes at least one of the following:
a preamble, device identification information, an ACK, scheduling information of DO-DTT, a sleep command, a negative acknowledgement (Negative Acknowledgement, NACK), scheduling information for rescheduling transmission of the second signaling, and a third backoff time; where
the ACK is used to indicate that the second signaling is correctly received; and
the NACK is used to indicate one of the following:
   demodulation failure of the second signaling;
   demodulation failure of the DO-DTT data carried in the second signaling; and
   failure to receive the DO-DTT data in the second signaling.

For the device identification information, reference may be made to the corresponding description in the above implementation, and details are not repeated herein.

That the third signaling is not detected within the first time may be that the first device does not detect the second signaling or the second signaling detection fails before the timer/time window corresponding to the second signaling expires, and the first device determines that the connection between the first device and the second device fails, or confirms that the second device fails to identify the first device.

Optionally, in a first case, the first device determines that the connection to the second device is successful, or determines that the second signaling is successfully received by the second device, or determines that the first device is identified by the second device; or
in a second case, the first device determines that the connection to the second device fails, or determines that the second signaling is not successfully received by the second device, or determines that the first device is not identified by the second device;
the first case includes at least one of the following:
   a preamble included in the third signaling matches the preamble included in the second signaling; and
   device identification information included in the third signaling matches the device identification information included in the second signaling; and
   the second case includes at least one of the following:
      the preamble included in the third signaling does not match the preamble included in the second signaling; and
      the device identification information included in the third signaling does not match the device identification information included in the second signaling.

In some implementations, in a case that the third signaling includes an ACK, the first device determines that the connection to the second device is successful, or determines that the second signaling is successfully received by the second device, or determines that the first device is identified by the second device.

In some implementations, in a case that the third signaling includes an NACK or scheduling information for rescheduling transmission of the second signaling, the first device determines that the connection to the second device fails, or determines that the second signaling is not successfully received by the second device, or determines that the first device is not identified by the second device.

In the foregoing implementations, it is possible to determine, based on the third signaling, whether the first device is successfully connected to the second device, whether the second signaling is successfully received by the second device, and whether the first device is identified by the second device, thereby supporting DO-DTT or DT data transmission to be performed before the first device is connected to the second device, or supporting DO-DTT or DT data transmission to be performed before the first device is identified by the second device, so as to improve the transmission performance of DO-DTT or DT data transmission.

Optionally, in a case that the connection to the second device is successful, the method further includes at least one of the following:
receiving and demodulating, by the first device, second DT data, where the second DT data is DT data carried in the third signaling;
sending, by the first device, fourth signaling; and
monitoring, by the first device, fifth signaling within a second time, where the second time includes: a timer running time corresponding to the fifth signaling, or a time window corresponding to the fifth signaling; where
the fourth signaling includes at least one of the following:
   device identification information;
   DO-DTT data;
   data scheduled by the third signaling;
   a data amount of the first device;
   a channel state of the first device;
   a battery status of the first device;
   a sleep request; and
   indication information used to indicate that the first device will sleep.

The DO-DTT data may be subsequent DO-DTT data of the DO-DTT data carried in the second signaling.

The second DT data may be first transmission or retransmission of the DT data carried in the first signaling. For example, the DT data carried in the third signaling includes: retransmission data of the DT data carried in the first signaling. In this way, retransmission of DT data can be realized, thereby improving the reliability of DT data transmission.

The monitoring, by the first device, fifth signaling within a second time may be: after the first device sends the fourth signaling, starting a timer/time window corresponding to monitoring the fifth signaling, where the timer/time window corresponding to the fifth signaling may be predefined, or configured by higher-layer signaling, or indicated by system information trigger signaling or the third signaling.

In the foregoing implementations, the first device can send the fourth signaling to the second device to transmit more related information of the first device to the second device, thereby improving interaction performance between the first device and the second device.

In some implementations, in a case that it is determined that the second signaling is successfully received by the second device or it is determined that the first device is identified by the second device, at least one of the foregoing operations may be performed, and the same technical effect can be achieved.

Optionally, the method further includes at least one of the following:
in a case that the fifth signaling is detected within the second time, determining, based on the fifth signaling, whether the first device is identified by the second device;
in a case that the fifth signaling is detected within the second time, determining, based on the fifth signaling, whether conflict is successfully resolved;
in a case that the fifth signaling is not detected within the second time, determining that the first device is not identified by the second device; and
in a case that the fifth signaling is not detected within the second time, determining that conflict resolution fails.

Whether the first device is identified by the second device may be understood as whether the first device is successfully identified by the second device.

In some implementations, in a case that device identification information included in the fifth signaling matches the device identification information included in the fourth signaling, it is determined that the first device is identified by the second device, or that conflict resolution is successful; or
in a case that device identification information included in the fifth signaling does not match the device identification information included in the fourth signaling, it is determined that the first device is not identified by the second device, or that conflict resolution fails.

In the foregoing implementations, since whether the first device is identified by the second device or whether conflict is successfully resolved can be determined based on the fifth signaling, compatibility with 3GPP communication procedures in DO-DTT or DT data transmission can be realized, reducing impact on network devices or other non-A-IoT devices.

Optionally, the fifth signaling carries at least one of the following:
retransmission data of the DT data carried in the first signaling; and
retransmission data of the DT data carried in the third signaling.

In this implementation, retransmission of DT data can be realized, thereby improving the transmission reliability of DT data.

Optionally, the method further includes:
in a case that the connection to the second device fails, sending the first signaling after a delay of a fourth backoff time; where
the fourth backoff time includes one of the following:
   a backoff time randomly selected between 0 and the third backoff time;
   a backoff time randomly selected between 0 and a second target time, where the second target time is 2^{t2}-1, and t2 represents the third backoff time;
   a backoff time randomly selected between 0 and a fifth backoff time; and
   a backoff time randomly selected between 0 and a third target time, where the third target time is 2^{t3}-1, and t3 represents the fifth backoff time; where
   the third backoff time is a backoff time indicated by the third signaling, and the fifth backoff time is a backoff time obtained by adding an offset to the second backoff time indicated by the first signaling.

The sending the first signaling after a delay of a fourth backoff time may be understood as the first device resending the first signaling after a delay of the fourth backoff time.

The backoff time indicated by the third signaling may be a second target backoff time indicated by the third signaling, that is, a target BI.

The offset may be indicated by the third signaling or configured by higher layer. If the offset is not indicated or configured, a default value of the offset is 0.

In this implementation, the first signaling can be sent based on the backoff time indicated by the third signaling or the backoff time obtained by adding an offset to the second backoff time indicated by the first signaling, reducing the probability of conflict between the first signaling and other signaling.

In some implementations, in a case that it is determined that the second signaling is not successfully received by the second device or it is determined that the first device is not identified by the second device, the first signaling may be sent after a delay of the fourth backoff time, and the same technical effect can be achieved.

In the embodiments of this application, a first device receives first signaling, where the first signaling is used to trigger DO-DTT, or the first signaling carries DT data; and the first device sends second signaling, where the second signaling satisfies at least one of the following: a sending time of the second signaling is: a time indicated by the first signaling, or a time obtained after a delay of a first backoff time; the second signaling includes DO-DTT data; and the second signaling includes feedback on first DT data. In this way, since the sending time of the second signaling is the time indicated by the first signaling or the time obtained after a delay of the first backoff time, conflict of the first signaling can be reduced, thereby improving transmission performance of DO-DTT or DT data transmission. The second signaling includes the DO-DTT data or the second signaling includes the feedback on the first DT data, so that related transmission of the DO-DTT data or the first DT data can be implemented based on the first signaling, thereby improving the transmission performance of DO-DTT or DT data transmission.

Referring to FIG. 4, FIG. 4 is a flowchart of another data transmission method according to an embodiment of this application. As shown in FIG. 4, the method includes the following steps.

Step 401: A second device sends first signaling, where the first signaling is used to trigger DO-DTT, or the first signaling carries DT data.

Step 402: The second device receives second signaling, where the second signaling satisfies at least one of the following:
a sending time of the second signaling is: a time indicated by the first signaling, or a time obtained after a delay of a first backoff time;
the second signaling includes DO-DTT data; and
the second signaling includes feedback on first DT data.

Optionally, the first signaling is used to trigger DO-DTT of one first device, or the first signaling carries DT data of one first device; or
the first signaling is used to trigger DO-DTT of at least one group of first devices, or the first signaling carries DT data of at least one group of first devices; or
the first signaling is used to trigger DO-DTT of all first devices covered by the second device, or the first signaling carries DT data of all first devices covered by the second device, where the second device is a device that sends the first signaling.

Optionally, the first signaling indicates the sending time of the second signaling, and the sending time of the second signaling is the time indicated by the first signaling; or
the first signaling indicates a second backoff time, and the sending time of the second signaling is a sending time obtained after a delay of the first backoff time, where the first backoff time includes one of the following:
a backoff time randomly selected between 0 and the second backoff time; and
a backoff time randomly selected between 0 and a first target time, where the first target time is 2^{t1}-1, and t1 represents the second backoff time.

Optionally, a resource for the second device to receive the second signaling includes one of the following:
a resource indicated by the first signaling; and
a network-side configured resource, where the network-side configured resource includes: a contention-based resource or a non-contention-based resource.

Optionally, the second signaling further includes at least one of the following:
a preamble, device identification information, a data amount of a first device, a channel state of the first device, and a battery status of the first device; where
the device identification information includes one of the following:
   device unique identification information, device group identification information, and identification information used to indicate all first devices covered by the second device, where the second signaling is signaling sent by the first device.

Optionally, the first DT data includes one of the following:
in a case that the first signaling triggers DO-DTT, DT data carried in the first signaling and related to the triggering of DO-DTT; and
in a case that the first signaling carries DT data, the DT data carried in the first signaling.

Optionally, the first DT data includes one of the following:
unicast DT data, multicast DT data, and broadcast DT data.

Optionally, after the second device receives the second signaling, the method further includes:
sending, by the second device, third signaling, where the third signaling is used to determine at least one of the following:
whether a first device is successfully connected to the second device;
whether the second signaling is successfully received by the second device;
whether the first device is identified by the second device; and
where the second signaling is signaling sent by the first device.

Optionally, the third signaling includes at least one of the following:
a preamble, device identification information, an acknowledgement ACK, scheduling information of DO-DTT, a sleep command, a negative acknowledgement NACK, scheduling information for rescheduling transmission of the second signaling, and a third backoff time; where
the ACK is used to indicate that the second signaling is correctly received; and
the NACK is used to indicate one of the following:
   demodulation failure of the second signaling;
   demodulation failure of the DO-DTT data carried in the second signaling; and
   failure to receive the DO-DTT data in the second signaling.

Optionally, after the second device sends the third signaling, the method further includes at least one of the following:
receiving, by the second device, fourth signaling;
sending, by the second device, fifth signaling, where the fifth signaling is used to determine whether the first device is identified by the second device, or determine whether conflict is successfully resolved; where
the fourth signaling includes at least one of the following:
   device identification information;
   DO-DTT data;
   data scheduled by the third signaling;
   a data amount of the first device;
   a channel state of the first device;
   a battery status of the first device;
   a sleep request; and
   indication information used to indicate that the first device will sleep.

Optionally, DT data carried in the third signaling includes:
retransmission data of the DT data carried in the first signaling.

Optionally, the fifth signaling carries at least one of the following:
retransmission data of the DT data carried in the first signaling; and
retransmission data of the DT data carried in the third signaling.

It should be noted that for specific implementation of this embodiment as an implementation of the second device corresponding to the embodiment shown in FIG. 3, reference may be made to the related description of the embodiment shown in FIG. 3. To avoid repetition, details are not repeated in this embodiment.

The following takes the first device being a Tag and the second device being a Reader as an example to describe the method in the embodiments of this application through multiple embodiments.

### Embodiment 1:

A tag monitors and receives first signaling (that is, trigger signaling) used to trigger transmission of DO-DTT data or transmission of DT data. Only a tag that satisfies/matches device identification information (such as tag identification information) indicated in the first signaling performs, based on indication of the first signaling, at least one of the following:
(a) determining a time for sending second signaling, including at least one of the following:
   if the first signaling indicates the sending time of the second signaling, sending, by the tag, the second signaling based on the indicated sending time; and
   if the first signaling indicates a first target backoff time (that is, a BI), determining, by the tag based on the first target BI, a backoff time according to a first rule, and sending the second signaling after a delay of the backoff time, where the first rule includes at least one of the following:
      a backoff time is randomly selected from a uniform distribution between 0 and a target BI; and
      a value is randomly selected from {0, ..., 2^{target BI}-1} as the backoff time;
(b) determining a time-frequency resource for sending the second signaling, including at least one of the following:
   if the first signaling indicates a time-frequency resource of the second signaling, sending, by the tag, the second signaling on the specified time-frequency resource; and
   sending the second signaling on a time-frequency resource configured for the second signaling by higher-layer signaling or system information; where
   the time-frequency resource used by the second signaling may be a contention-based resource (that is, a same time-frequency resource shared by multiple tags), or a non-contention-based resource (that is, the time-frequency resource is used by one tag and is not shared with other tags);
(c) receiving and demodulating DT data carried in the first signaling;
(d) sending second signaling to a reader, where the second signaling includes at least one of the following:
   a preamble, used at least for synchronization between the tag and the reader or tag identification; where the preamble may be a contention-based preamble (that is, a preamble shared by multiple tags) or a non-contention-based preamble (that is, the preamble is used by one tag and is not shared with other tags);
   tag identification information, including at least one of unique identification information of one/a specific tag, tag group identification information of a group of tags (multiple tags), and all identification information of all/entire tags covered by the reader; where the unique identification information of a tag means that all tags covered by the reader have different unique IDs to differentiate between different tags; the tag group identification information may be a device type (for example, a first device type is passive IoT, semi-passive IoT, or active IoT device), or a group of devices satisfying a certain screening condition/inventory command, where the screening condition/inventory command is indicated by the first signaling; and when the first signaling is broadcast signaling, or when a device identification parameter/field in the first signaling indicates "all identified" or the first signaling does not indicate device identification information, it means that the tag that triggers device-originated data is all/entire tags covered by the reader; and
   at least one of feedback on DT data (that is, the demodulated DT data) in DO-DTT of the first signaling (that is, the tag reports whether the DT data is correctly demodulated), a data amount of the tag side, a channel state of the tag side, and a battery status of the tag side; and
(e) after the tag sends the second signaling, a timer or time window corresponding to receiving/monitoring third signaling is started, where the timer or time window corresponding to the third signaling may be predefined, or configured by higher-layer signaling, or indicated by system information or the first signaling.

The tag monitors and receives the third signaling during the running of the timer/time window corresponding to the third signaling.

If the third signaling is detected, the tag determines, based on indication of the third signaling, whether connection/access to a reader is successful;
if a preamble or tag identification information indicated in the third signaling is the same as/matches the preamble or tag identification information sent by the tag in the second signaling, the tag determines/confirms that connection/access to the reader is successful;
if a preamble or tag identification information indicated in the third signaling does not match the preamble or tag identification information sent by the tag in the second signaling, the tag determines/confirms that connection/access to the reader fails; and
if the tag does not detect the third signaling or the third signaling detection fails before the timer/time window corresponding to the third signaling expires, the tag determines/confirms that connection/access to the reader fails.

When the tag confirms that the connection/access to the reader is successful, it performs at least one of the following:
receiving and demodulating DT data, where the DT data may be first transmission (that is, for a case that the first signaling does not carry DT data), or retransmission of the DT data carried in the first signaling;
sending fourth signaling, where the fourth signaling includes at least one of the following: tag identification information, device-originated-device-terminated triggered data in the first signaling, data scheduled by the third signaling, feedback on the demodulated DT data (that is, the tag reports whether the DT data is correctly demodulated), a data amount of the tag side, a channel state of the tag side, a battery status of the tag side, a sleep request of the tag, and an indication to the reader that the tag will sleep; and
after the tag sends the third signaling, starting a timer/time window corresponding to monitoring fifth signaling, where the timer/time window corresponding to the fifth signaling may be predefined, or configured by higher-layer signaling, or indicated by system information, the first signaling, or the third signaling.

When the tag confirms that connection/access to the reader fails, it performs at least one of the following:
determining, by the tag based on a second target backoff time (that is, BI) indicated in the third signaling, a backoff time according to a second rule, and resending the second signaling after a delay of the backoff time, where the second rule includes at least one of the following:
a backoff time is randomly selected from a uniform distribution between 0 and a target BI; and
a value is randomly selected from {0, ..., 2^{target BI}-1} as the backoff time;
determining, by the tag based on a first target backoff time indicated in the second signaling, a backoff time based on (first target BI + first offset) according to a first rule, and resending the second signaling after a delay of the backoff time, where the first offset may be indicated by the third signaling or configured by higher layer; and if the first offset is not indicated/configured, a default value is 0;
based on terminal implementation, resending the second signaling after a delaying of a certain time or immediately; and
resending, by the tag, the second signaling only when the tag receives the first signaling again.

If the tag starts the timer/time window corresponding to the fifth signaling after sending the fourth signaling, during the running of the timer/time window corresponding to the fifth signaling, the tag monitors and receives the fifth signaling;
if the fifth signaling is detected, the tag determines, based on indication of the fifth signaling, whether it is successfully identified by the reader or whether conflict is successfully resolved;
if tag identification information indicated in the fifth signaling matches the tag identification information sent by the tag in the fourth signaling, the tag confirms that conflict resolution is successful;
if tag identification information indicated in the fifth signaling does not match the tag identification information sent by the tag in the fourth signaling, the tag confirms that conflict resolution fails; and
if the tag does not detect the fifth signaling or detection of the fifth signaling fails before the timer/time window corresponding to the fifth signaling expires, the tag confirms that conflict resolution fails.

### Embodiment 2:

In this embodiment, for DO-DTT, first signaling triggers one tag to initiate data transmission, that is, point-to-point (1 Reader to 1 Tag) transmission. Details are as follows:

Reader#1 sends first signaling to trigger transmission of DO-DTT, and indicates unique identification information of a tag in the first signaling, such as Tag ID=1. Optionally, the first signaling may also indicate a time-frequency resource used by the tag for non-contention transmission of second signaling (that is, the resource is used by Tag#1 only and is not shared with other tags). Optionally, the first signaling may also indicate a first target BI.

Tag#1 with Tag ID=1 and Tag#2 with Tag ID=2 receive the first signaling. Based on indication of the tag identification information in the first signaling, Tag#2 determines that a target tag in the first signaling is not itself and discards the first signaling or takes no action; while Tag#1 determines that the target tag in the first signaling is itself and performs the following steps:

Step 1: Send second signaling, and start a timer/monitoring window corresponding to third signaling in a first time after the second signaling is sent. The first time is determined by at least one of a transition time required for the tag to transit from transmission to reception and a time required for the reader to demodulate the second signaling; and
if the first signaling sent by Reader#1 indicates a time and a time-frequency resource for Tag#1 to send the second signaling, Tag#1 sends the second signaling on the specified time and time-frequency resource; otherwise, Tag#1 selects, based on a time-frequency resource configured for the second signaling by higher-layer signaling or system information, one time-frequency resource to send the second signaling.

The second signaling includes a preamble and DO-DTT data, where usage scenarios include: Tag#1 has not yet implemented uplink synchronization with Reader#1, and the tag has a power saving requirement; or
the second signaling does not include a preamble and includes DO-DTT data, where a usage scenario includes: Tag#1 satisfies a requirement for uplink synchronization with Reader#1.

Step 2: Tag#1 monitors and receives third signaling within a running timer/monitoring window corresponding to the third signaling, where the third signaling may include at least one of the following:
an ACK, used to inform Tag#1 that the second signaling has been correctly received;
scheduling information for scheduling subsequent DO-DTT data transmission, such as a time-frequency resource, a sending time, and a data size;
a sleep command (Sleep command), to make Tag#1 enter a sleep state or exit from a current inventory;
an NACK, used to inform Tag#1 of demodulation failure;
rescheduling of transmission of the second signaling; and
a second target BI.

Step 3-1: Tag#1 has detected the third signaling and performs at least one of the following behaviors:
in a case that the third signaling includes an ACK, transmitting subsequent DO-DTT data, or taking no action until a command is received from the reader again, or exiting from a current inventory/session and confirming that the current inventory/session ends, or sleeping;
in a case that the third signaling includes scheduling information for scheduling subsequent DO-DTT data transmission, transmitting subsequent DO-DTT data based on indication of the scheduling information;
in a case that the third signaling includes an NACK, randomly selecting, by the tag, a backoff time from a uniform distribution between 0 and the second or first target BI based on the second target BI or the first target BI, retransmitting the second signaling after a delay of the backoff time, and returning to Step 1, or taking no action until a command is received from the reader again, or exiting the current inventory/session and confirming that the current inventory/session ends, or sleeping;
in a case that the third signaling reschedules transmission of the second signaling, transmitting subsequent DO-DTT data based on indication of the rescheduling information, or randomly selecting, by the tag, a backoff time from a uniform distribution between 0 and the second or first target BI, and transmitting subsequent DO-DTT data based on indication of the rescheduling information after a delay of the backoff time; and
in a case that the third signaling includes a sleep command, sleeping.

Step 3-2: If Tag#1 detects no third signaling before the timer/time window of the third signaling expires, Tag#1 performs at least one of the following behaviors:
randomly selecting, by the tag, a backoff time from a uniform distribution between 0 and the second or first target BI based on the first target BI, retransmitting the second signaling after a delay of the backoff time, and returning to Step 1;
taking no action until a command is received from the reader again;
exiting from a current inventory/session and confirming that the current inventory/session ends; and
sleeping.

### Embodiment 3:

In this embodiment, for DO-DTT, first signaling triggers one group of or all tags to initiate data transmission, that is, point-to-multipoint (1 Reader corresponding to one group of tags) transmission or broadcast transmission (for all tags). Details are as follows:

Reader#1 sends first signaling to trigger transmission of DO-DTT, and indicates tag group identification information in the first signaling, such as Tag Group ID=1; or a tag type being Passive IoT or Active IoT; or a group of tags satisfying a certain screening condition (for example, a tag with a product production date =, or >, or < a specific year, month and day)/an inventory command (for example, querying for a tag that supports sensing/measuring temperature and humidity, and requesting a tag to report current humidity and temperature of the equipment room; or querying only logistics information of goods A). The first signaling indicates a first target BI, where BI=10 slots.

A group of tags satisfies the tag identification information in a trigger command, for example, Tag Group#1 containing 3 tags with Tag IDs=1, 2, 3, and Tag Group2 containing 3 tags with Tag IDs=4, 5, 6. The tags in Tag Group#1 and Tag Group#2 receive/demodulate the trigger command at slot n, assuming n=0. Based on indication of the tag identification information in the trigger command, the tags belonging to Tag Group#2 determine that a target tag in the trigger command is not themselves and discard the trigger command or take no action; while Tags#1, 2, 3 in Tag Group#1 determine that the target tag in the trigger command is themselves and perform the following steps.

### Step 1: Send second signaling.

Tag#1 randomly selects a backoff time, such as j_1=1 slot, from a uniform distribution between 0 and a first target BI=10 slots, then Tag#1 delays for j_1 slots and sends the second signaling (assuming that the second signaling uses L slots, where L=2) at slot (n+1+j_1)=slot (0+1+1)=slot 2. After the second signaling is sent, Tag#1 waits for a first time, X slots (assuming X=1 slot), and starts a timer/monitoring window corresponding to third signaling at slot [(n+1+j_1)+(L-1)+X+1]=5.

Tag#2 randomly selects a backoff time, such as j_2=5 slots, from a uniform distribution between 0 and the first target BI=10 slots; after a delay of 5 slots, sends the second signaling at slot (n+1+j_2)=slot (0+1+5)=slot 6; and after the second signaling is sent, waits for a first time and starts a timer/monitoring window corresponding to third signaling at slot [(n+1+j_2)+(L-1)+X+1]=9.

Tag#3 randomly selects a backoff time, such as j_3=5 slots, from a uniform distribution between 0 and the first target BI=10 slots; after a delay of 5 slots, sends the second signaling at slot (n+1+j_3)=slot (0+1+5)=slot 6; and after the second signaling is sent, waits for a first time and starts a timer/monitoring window corresponding to third signaling at slot [(n+1+j_3)+(L-1)+X+1]=9.

The first time is determined by at least one of a transition time required for the tag to transit from transmission to reception and a time required for the reader to demodulate the second signaling.

The transition times required for different tag groups to transit from transmission to reception may be different.

The second signaling sent by Tag#2 and Tag#3 conflicts/contends for a resource; while a resource used for the second signaling sent by Tag#1 has no conflict.

The second signaling of Tag#1, Tag#2 and Tag#3 is as follows:
second signaling including a preamble only; where a usage scenario is as follows: for a group having many tags, or when a value of the BI is relatively small, transmission conflict is likely to occur, so a tag is identified first, and then DO-DTT data is scheduled, thereby improving resource utilization efficiency;
second signaling including a preamble and DO-DTT data; and
second signaling including DO-DTT data only.

### For Tag#1:

If the second signaling includes a preamble and DO-DTT data or includes DO-DTT data only, the subsequent DO-DTT process and behavior of Tag#1 are consistent with those in Embodiment 2. Details are not repeated herein.

If the second signaling includes a preamble only, the subsequent DO-DTT process and behavior of Tag#1 involve the following steps:

Step 2: Tag#1 monitors and sends third signaling within the running timer/monitoring window corresponding to the third signaling, where the third signaling may include at least one of the following:
a preamble;
scheduling information for scheduling DO-DTT data transmission of the tag, such as a time-frequency resource, a sending time, and a data size; and
a second target BI.

Step 3-1: If Tag#1 has detected the third signaling, its behavior includes the following steps:
in a case that the third signaling includes a preamble and scheduling information for scheduling DO-DTT data transmission of the tag, if an ID of the preamble in the detected third signaling matches the preamble sent by Tag#1 in the second signaling, Tag#1 transmits fourth signaling based on the scheduling information for scheduling DO-DTT data transmission of the tag, where the fourth signaling at least includes unique identification information of Tag#1; starts a timer/time window corresponding to fifth signaling; and proceeds to Step 4;
otherwise (including: the ID of the preamble does not match the preamble sent by Tag#1 in the second signaling, or demodulation of the third signaling fails), the behavior of Tag#1 is at least one of the following:
   randomly selecting, by the tag, a backoff time from a uniform distribution between 0 and the second target BI or the first target BI based on the second target BI or the first target BI, retransmitting the second signaling after a delay of the backoff time, and returning to Step 1;
   taking no action until a command is received from the reader again;
   exiting from a current inventory/session and confirming that the current inventory/session ends; and
   sleeping.

Step 3-2: If Tag#1 detects no third signaling before the timer/time window corresponding to the third signaling expires, the behavior of Tag#1 is at least one of the following:
randomly selecting, by the tag, a backoff time from a uniform distribution between 0 and the second target BI or the first target BI based on the first target BI, retransmitting the second signaling after a delay of the backoff time, and returning to Step 1;
taking no action until a command is received from the reader again;
exiting from a current inventory/session and confirming that the current inventory/session ends; and
sleeping.

Step 4: During the running of the timer/time window corresponding to the fifth signaling, Tag#1 monitors and receives the fifth signaling, where the fifth signaling may include at least one of the following:
unique identification information of the tag;
scheduling information for scheduling DO-DTT data transmission of the tag, such as a time-frequency resource, a sending time, and a data size; and
a third target BI.

Step 4-1: If Tag#1 has detected the fifth signaling, its behavior includes the following steps:
in a case that the fifth signaling includes the unique identification information of the tag and the scheduling information for scheduling DO-DTT data transmission of the tag, if the unique identification information of the tag in the detected fifth signaling matches the unique identification information of the tag sent by Tag#1 in the fourth signaling, Tag#1 transmits subsequent DO-DTT data of the tag based on the scheduling information for scheduling DO-DTT data transmission of the tag;
otherwise (including: the unique identification information of the tag does not match the unique identification information of the tag sent by Tag#1 in the fourth signaling or demodulation of the fifth signaling fails), the behavior of Tag#1 is at least one of the following:
   randomly selecting, by the tag, a backoff time from a uniform distribution between 0 and the second or first target BI based on the third target BI or the second target BI or the first target BI, retransmitting the second signaling after a delay of the backoff time, and returning to Step 1;
   taking no action until a command is received from the reader again;
   exiting from a current inventory/session and confirming that the current inventory/session ends; and
   sleeping.

Step 3-2: If Tag#1 detects no fifth signaling before the timer/time window corresponding to the fifth signaling expires, the behavior of Tag#1 is at least one of the following:
randomly selecting, by the tag, a backoff time from a uniform distribution between 0 and the first target BI or the second target BI based on the first target BI or the second target BI, retransmitting the second signaling after a delay of the backoff time, and returning to Step 1;
taking no action until a command is received from the reader again;
exiting from a current inventory/session and confirming that the current inventory/session ends; and
sleeping.

### For Tag#2 and Tag#3:

Since transmissions of the second signaling of Tag#2 and Tag#3 conflict, conflict resolution is required, and specifically, conflict resolution may be performed through the third signaling, the fourth signaling, and the fifth signaling, where the reader may indicate/update a Backoff value in the third signaling or the fifth signaling;
if the third signaling or the fifth signaling is not received within the running time window/timer; or demodulation of the third signaling or the fifth signaling fails, in addition to retransmitting the second signaling, the behavior of the Tag may further be: based on protocol specification, or higher-layer configuration, or indication of the first signaling (for a case that the third signaling is not received or demodulated successfully) or the third signaling (for a case that the fifth signaling is not received or demodulated successfully), performing at least one of the following:
taking no action until a command is received from the reader again;
exiting from a current inventory/session and confirming that the current inventory/session ends; and
sleeping.

### Embodiment 4:

This embodiment is specific to DT data/service transmission. Details are as follows:
Reader#1 sends first signaling to trigger transmission of DT service. The specific process and behavior of the tag are similar to those in Embodiment 2 or Embodiment 3, and the differences include at least one of the following:
compared with the first signaling triggering transmission of DO-DTT service, the first signaling triggering DT service may also carry DT data specific to one tag or one group of tags or all tags covered by the reader; where
the DT data specific to one tag is point-to-point unicast (unicast) DT data;
the DT data specific to one group of tags is point-to-multipoint multicast (multicast) DT data; and
the DT data specific to all tags is broadcast (broadcast) DT data; where
when receiving the first signaling triggering DT service, one tag or one group of tags or all tags covered by the reader that satisfy the tag identification information demodulate the DT data, and transmit second signaling;
compared with transmission of the second signaling for DO-DTT service, transmission of the second signaling for DT service may further include feedback information of the tag on demodulation of the DT data carried in the first signaling (that is, the tag reports whether the DT data is correctly demodulated); and
compared with transmission of DO-DTT service, the third signaling and fifth signaling related to DT service may further include retransmission of the DT data carried in the first signaling.

The data transmission method according to the embodiments of this application realizes, based on the 3rd Generation Partnership Project (3rd Generation Partnership Project, 3GPP) communication procedure, DO-DTT and DT procedures of A-IoT while reducing the probability of conflict in multiple A-IoT communications, thereby improving communication efficiency and reducing communication latency. In addition, since the embodiments of this application are compatible with related 3GPP communication procedures, impact on network devices or other non-A-IoT devices is reduced.

The data transmission method in the embodiments of this application may be executed by a data transmission apparatus. In the embodiments of this application, the data transmission apparatus executing the data transmission method is taken as an example to illustrate the data transmission apparatus provided in the embodiments of this application.

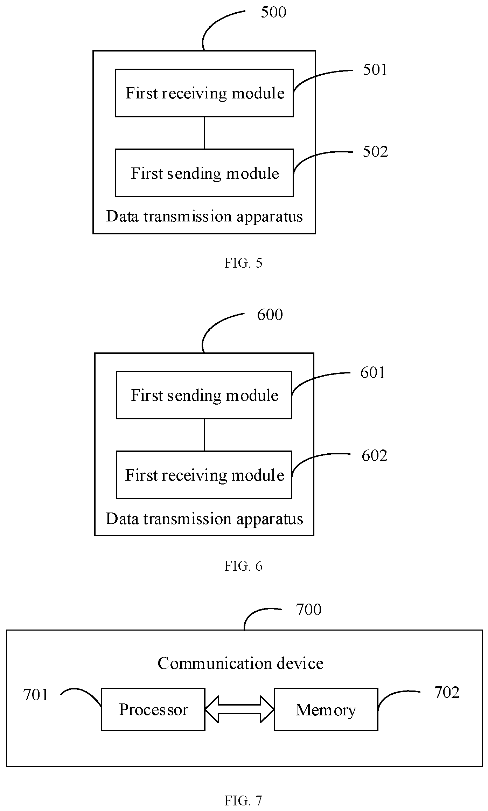

Referring to FIG. 5, FIG. 5 is a structural diagram of a data transmission apparatus according to an embodiment of this application. As shown in FIG. 5, the data transmission apparatus 500 includes:
a first receiving module 501 configured to receive first signaling, where the first signaling is used to trigger DO-DTT, or the first signaling carries DT data; and
a first sending module 502 configured to send second signaling, where the second signaling satisfies at least one of the following:
   a sending time of the second signaling is: a time indicated by the first signaling, or a time obtained after a delay of a first backoff time;
   the second signaling includes DO-DTT data; and
   the second signaling includes feedback on first DT data.

Optionally, the first signaling is used to trigger DO-DTT of one first device, or the first signaling carries DT data of one first device; or
the first signaling is used to trigger DO-DTT of at least one group of first devices, or the first signaling carries DT data of at least one group of first devices; or
the first signaling is used to trigger DO-DTT of all first devices covered by a second device, or the first signaling carries DT data of all first devices covered by the second device, where the second device is a device that sends the first signaling.

Optionally, the first signaling indicates the sending time of the second signaling, and the sending time of the second signaling is the time indicated by the first signaling; or
the first signaling indicates a second backoff time, and the sending time of the second signaling is a sending time obtained after a delay of the first backoff time, where the first backoff time includes one of the following:
a backoff time randomly selected between 0 and the second backoff time; and
a backoff time randomly selected between 0 and a first target time, where the first target time is 2^{t1}-1, and t1 represents the second backoff time.

Optionally, a resource for sending the second signaling includes one of the following:
a resource indicated by the first signaling; and
a network-side configured resource, where the network-side configured resource includes: a contention-based resource or a non-contention-based resource.

Optionally, the second signaling further includes at least one of the following:
a preamble, device identification information, a data amount of the first device, a channel state of the first device, and a battery status of the first device; where
the device identification information includes one of the following:
   device unique identification information, device group identification information, and identification information used to indicate all first devices covered by a second device, where the second device is a device that sends the first signaling.

Optionally, the first DT data includes one of the following:
in a case that the first signaling triggers DO-DTT, DT data carried in the first signaling and related to the triggering of DO-DTT; and
in a case that the first signaling carries DT data, the DT data carried in the first signaling.

Optionally, the first DT data includes one of the following:
unicast DT data, multicast DT data, and broadcast DT data.

Optionally, the apparatus further includes:
a first monitoring module configured to monitor third signaling within a first time, where the first time includes: a timer running time corresponding to the third signaling, or a time window corresponding to the third signaling;
a first determining module configured to, in a case that the third signaling is not detected within the first time, determine at least one of the following: that connection to the second device fails, that the second signaling is not successfully received by the second device, and that the first device is not identified by the second device; or in a case that the third signaling is detected within the first time, determine, based on the third signaling, at least one of the following:
   whether the first device is successfully connected to the second device;
   whether the second signaling is successfully received by the second device;
   whether the first device is identified by the second device; and
   where the third signaling is signaling sent by the second device.

Optionally, the third signaling includes at least one of the following:
a preamble, device identification information, an acknowledgement ACK, scheduling information of DO-DTT, a sleep command, a negative acknowledgement NACK, scheduling information for rescheduling transmission of the second signaling, and a third backoff time; where
the ACK is used to indicate that the second signaling is correctly received;
the NACK is used to indicate one of the following:
   demodulation failure of the second signaling;
   demodulation failure of the DO-DTT data carried in the second signaling; and
   failure to receive the DO-DTT data in the second signaling.

Optionally, in a first case, the first device determines that the connection to the second device is successful, or determines that the second signaling is successfully received by the second device, or determines that the first device is identified by the second device; or
in a second case, the first device determines that the connection to the second device fails, or determines that the second signaling is not successfully received by the second device, or determines that the first device is not identified by the second device;
the first case includes at least one of the following:
   the preamble included in the third signaling matches the preamble included in the second signaling; and
   the device identification information included in the third signaling matches the device identification information included in the second signaling; and
   the second case includes at least one of the following:
      the preamble included in the third signaling does not match the preamble included in the second signaling; and
      the device identification information included in the third signaling does not match the device identification information included in the second signaling.

Optionally, the apparatus further includes at least one of the following:
a second receiving module configured to, in a case that the connection to the second device is successful, receive and demodulate second DT data, where the second DT data is DT data carried in the third signaling;
a second sending module configured to, in a case that the connection to the second device is successful, send fourth signaling; and
a second monitoring module configured to, in a case that the connection to the second device is successful, monitor fifth signaling within a second time, where the second time includes: a timer running time corresponding to the fifth signaling, or a time window corresponding to the fifth signaling; where
the fourth signaling includes at least one of the following:
   device identification information;
   DO-DTT data;
   data scheduled by the third signaling;
   a data amount of the first device;
   a channel state of the first device;
   a battery status of the first device;
   a sleep request; and
   indication information used to indicate that the first device will sleep.

Optionally, the DT data carried in the third signaling includes:
retransmission data of the DT data carried in the first signaling.

Optionally, the apparatus further includes at least one of the following:
a second determining module configured to, in a case that the fifth signaling is detected within the second time, determine, based on the fifth signaling, whether the first device is identified by the second device; and
a third determining module configured to: in a case that the fifth signaling is detected within the second time, determine, based on the fifth signaling, whether conflict is successfully resolved;
in a case that the fifth signaling is not detected within the second time, determine that the first device is not identified by the second device; and
in a case that the fifth signaling is not detected within the second time, determine that conflict resolution fails.

Optionally, in a case that device identification information included in the fifth signaling matches the device identification information included in the fourth signaling, it is determined that the first device is identified by the second device, or that conflict resolution is successful; or
in a case that device identification information included in the fifth signaling does not match the device identification information included in the fourth signaling, it is determined that the first device is not identified by the second device, or that conflict resolution fails.

Optionally, the fifth signaling carries at least one of the following:
retransmission data of the DT data carried in the first signaling; and
retransmission data of the DT data carried in the third signaling.

Optionally, the apparatus further includes:
a third sending module configured to, in a case that the connection to the second device fails, send the first signaling after a delay of a fourth backoff time; where
the fourth backoff time includes one of the following:
   a backoff time randomly selected between 0 and the third backoff time;
   a backoff time randomly selected between 0 and a second target time, where the second target time is 2^{t2}-1, and t2 represents the third backoff time;
   a backoff time randomly selected between 0 and a fifth backoff time; and
   a backoff time randomly selected between 0 and a third target time, where the third target time is 2^{t3}-1, and t3 represents the fifth backoff time; where
   the third backoff time is a backoff time indicated by the third signaling, and the fifth backoff time is a backoff time obtained by adding an offset to the second backoff time indicated by the first signaling.

The data transmission apparatus can improve data transmission performance of a device.

In the embodiments of this application, the data transmission apparatus may be an electronic device, for example, an electronic device having an operating system, or may be a component in an electronic device, for example, an integrated circuit or a chip. The electronic device may be a terminal or another device different from a terminal. For example, the terminal may include but is not limited to the types of terminals listed above, and the another device may be a server, a network attached storage (Network Attached Storage, NAS), or the like, which is not specifically limited in the embodiments of this application.

The data transmission apparatus provided in the embodiments of this application can implement the processes implemented in the method embodiment of FIG. 3, with the same technical effect achieved. To avoid repetition, details are not repeated herein.

Referring to FIG. 6, FIG. 6 is a structural diagram of another data transmission apparatus according to an embodiment of this application. As shown in FIG. 6, the data transmission apparatus 600 includes:
a first sending module 601 configured to send first signaling, where the first signaling is used to trigger DO-DTT, or the first signaling carries DT data; and
a first receiving module 602 configured to receive second signaling, where the second signaling satisfies at least one of the following:
   a sending time of the second signaling is: a time indicated by the first signaling, or a time obtained after a delay of a first backoff time;
   the second signaling includes DO-DTT data; and
   the second signaling includes feedback on first DT data.

Optionally, the first signaling is used to trigger DO-DTT of one first device, or the first signaling carries DT data of one first device; or
the first signaling is used to trigger DO-DTT of at least one group of first devices, or the first signaling carries DT data of at least one group of first devices; or
the first signaling is used to trigger DO-DTT of all first devices covered by the second device, or the first signaling carries DT data of all first devices covered by the second device, where the second device is a device that sends the first signaling.

Optionally, the first signaling indicates the sending time of the second signaling, and the sending time of the second signaling is the time indicated by the first signaling; or
the first signaling indicates a second backoff time, and the sending time of the second signaling is a sending time obtained after a delay of the first backoff time, where the first backoff time includes one of the following:
a backoff time randomly selected between 0 and the second backoff time; and
a backoff time randomly selected between 0 and a first target time, where the first target time is 2^{t1}-1, and t1 represents the second backoff time.

Optionally, a resource for receiving the second signaling includes one of the following:
a resource indicated by the first signaling; and
a network-side configured resource, where the network-side configured resource includes: a contention-based resource or a non-contention-based resource.

Optionally, the second signaling further includes at least one of the following:
a preamble, device identification information, a data amount of a first device, a channel state of the first device, and a battery status of the first device; where
the device identification information includes one of the following:
   device unique identification information, device group identification information, and identification information used to indicate all first devices covered by the second device, where the second signaling is signaling sent by the first device.

Optionally, the first DT data includes one of the following:
in a case that the first signaling triggers DO-DTT, DT data carried in the first signaling and related to the triggering of DO-DTT; and
in a case that the first signaling carries DT data, the DT data carried in the first signaling.

Optionally, the first DT data includes one of the following:
unicast DT data, multicast DT data, and broadcast DT data.

Optionally, the apparatus further includes:
a second sending module configured to send third signaling, where the third signaling is used to determine at least one of the following:
whether a first device is successfully connected to the second device;
whether the second signaling is successfully received by the second device; and
whether the first device is identified by the second device; where
the second signaling is signaling sent by the first device.

Optionally, the third signaling includes at least one of the following:
a preamble, device identification information, an acknowledgement ACK, scheduling information of DO-DTT, a sleep command, a negative acknowledgement NACK, scheduling information for rescheduling transmission of the second signaling, and a third backoff time; where
the ACK is used to indicate that the second signaling is correctly received; and
the NACK is used to indicate one of the following:
   demodulation failure of the second signaling;
   demodulation failure of the DO-DTT data carried in the second signaling; and
   failure to receive the DO-DTT data in the second signaling.

Optionally, the apparatus further includes at least one of the following:
a second receiving module configured to receive fourth signaling; and
a third sending module configured to send fifth signaling, where the fifth signaling is used to determine whether the first device is identified by the second device, or determine whether conflict is successfully resolved; where
the fourth signaling includes at least one of the following:
   device identification information;
   DO-DTT data;
   data scheduled by the third signaling;
   a data amount of the first device;
   a channel state of the first device;
   a battery status of the first device;
   a sleep request; and
   indication information used to indicate that the first device will sleep.

Optionally, DT data carried in the third signaling includes:
retransmission data of the DT data carried in the first signaling.

Optionally, the fifth signaling carries at least one of the following:
retransmission data of the DT data carried in the first signaling; and
retransmission data of the DT data carried in the third signaling.

The data transmission apparatus can improve data transmission performance of a device.

In the embodiments of this application, the data transmission apparatus may be an electronic device, for example, an electronic device having an operating system, or may be a component in an electronic device, for example, an integrated circuit or a chip. The electronic device may be a terminal or a network-side device.

The data transmission apparatus provided in the embodiments of this application can implement the processes implemented in the method embodiment of FIG. 4, with the same technical effect achieved. To avoid repetition, details are not repeated herein.

Optionally, as shown in FIG. 7, an embodiment of this application further provides a communication device 700 including a processor 701 and a memory 702, where the memory 702 stores a program or instructions capable of running on the processor 701. For example, when the communication device 700 is a first device, the program or instructions, when executed by the processor 701, implement the steps of the foregoing data transmission method embodiments, with the same technical effect achieved. To avoid repetition, details are not repeated herein.

An embodiment of this application further provides a communication device including a processor and a communication interface. The processor or the communication interface is configured to receive first signaling, where the first signaling is used to trigger DO-DTT, or the first signaling carries DT data; and send second signaling, where the second signaling satisfies at least one of the following: a sending time of the second signaling is: a time indicated by the first signaling, or a time obtained after a delay of a first backoff time; the second signaling includes DO-DTT data; and the second signaling includes feedback on first DT data. The communication device embodiment corresponds to the foregoing data transmission method embodiments, and each implementation process and implementation of the foregoing method embodiments are applicable to the communication device embodiment, with the same technical effect achieved.

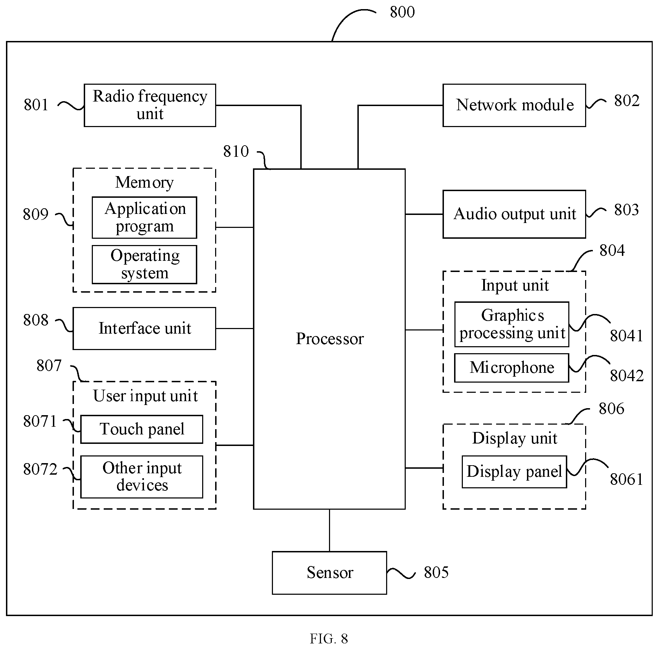

Specifically, FIG. 8 is a schematic diagram of a hardware structure of a device for implementing the embodiments of this application.

The device 800 includes but is not limited to at least some of components such as a radio frequency unit 801, a network module 802, an audio output unit 803, an input unit 804, a sensor 805, a display unit 806, a user input unit 807, an interface unit 808, a memory 809, and a processor 810.

Those skilled in the art can understand that the device 800 may further include a power supply (such as a battery) for supplying power to various components, and the power supply may be logically connected to the processor 810 through a power management system, so as to realize functions such as charging management, discharging management, and power consumption management through the power management system. The device structure shown in FIG. 8 does not constitute a limitation on the device, and the device may include more or fewer components than shown in the figures, or combine some components, or have different component arrangements, which are not described herein.

It should be understood that in the embodiments of this application, the input unit 804 may include a graphics processing unit (Graphics Processing Unit, GPU) 8041 and a microphone 8042. The graphics processor 8041 processes image data of still pictures or videos obtained by an image capture device (such as a camera) in a video capture mode or an image capture mode. The display unit 806 may include a display panel 8061, which may be configured in the form of a liquid crystal display, an organic light emitting diode, or the like. The user input unit 807 includes at least one of a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function key (such as a volume control key or an on/off key), a trackball, a mouse, and a joystick, which are not described herein.

In the embodiments of this application, after receiving downlink data from a network-side device, the radio frequency unit 801 may transmit the downlink data to the processor 810 for processing; in addition, the radio frequency unit 801 may send uplink data to the network-side device. Typically, the radio frequency unit 801 includes but is not limited to an antenna, an amplifier, a transceiver, a coupler, a low noise amplifier, and a duplexer.

The memory 809 may be configured to store a software program or instructions and various data. The memory 809 may mainly include a first storage area for storing programs or instructions and a second storage area for storing data. The first storage area may store an operating system, an application program or instructions required by at least one function (for example, a sound play function or an image play function), and the like. Additionally, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 809 in the embodiment of this application includes but is not limited to these and any other suitable types of memory.

The processor 810 may include one or more processing units. Optionally, the processor 810 integrates an application processor and a modem processor. The application processor primarily processes operations involving an operating system, a user interface, an application program, or the like. The modem processor, such as a baseband processor, primarily processes radio communication signals. It can be understood that the modem processor may alternatively be not integrated into the processor 810.

In this embodiment, the device is a first device. Specifically, the first device being a terminal is used as an example for illustration.

The radio frequency unit 801 is configured to receive first signaling, where the first signaling is used to trigger DO-DTT, or the first signaling carries DT data; and send second signaling, where the second signaling satisfies at least one of the following:
a sending time of the second signaling is: a time indicated by the first signaling, or a time obtained after a delay of a first backoff time;
the second signaling includes DO-DTT data; and
the second signaling includes feedback on first DT data.

Optionally, the first signaling is used to trigger DO-DTT of one first device, or the first signaling carries DT data of one first device; or
the first signaling is used to trigger DO-DTT of at least one group of first devices, or the first signaling carries DT data of at least one group of first devices; or
the first signaling is used to trigger DO-DTT of all first devices covered by a second device, or the first signaling carries DT data of all first devices covered by the second device, where the second device is a device that sends the first signaling.

Optionally, the first signaling indicates the sending time of the second signaling, and the sending time of the second signaling is the time indicated by the first signaling; or
the first signaling indicates a second backoff time, and the sending time of the second signaling is a sending time obtained after a delay of the first backoff time, where the first backoff time includes one of the following:
a backoff time randomly selected between 0 and the second backoff time; and
a backoff time randomly selected between 0 and a first target time, where the first target time is 2^{t1}-1, and t1 represents the second backoff time.

Optionally, a resource for the first device to send the second signaling includes one of the following:
a resource indicated by the first signaling; and
a network-side configured resource, where the network-side configured resource includes: a contention-based resource or a non-contention-based resource.

Optionally, the second signaling further includes at least one of the following:
a preamble, device identification information, a data amount of the first device, a channel state of the first device, and a battery status of the first device; where
the device identification information includes one of the following:
   device unique identification information, device group identification information, and identification information used to indicate all first devices covered by a second device, where the second device is a device that sends the first signaling.

Optionally, the first DT data includes one of the following:
in a case that the first signaling triggers DO-DTT, DT data carried in the first signaling and related to the triggering of DO-DTT; and
in a case that the first signaling carries DT data, the DT data carried in the first signaling.

Optionally, the first DT data includes one of the following:
unicast DT data, multicast DT data, and broadcast DT data.

Optionally, after the first device sends the second signaling, the radio frequency unit 801 is further configured to:
monitor third signaling within a first time, where the first time includes: a timer running time corresponding to the third signaling, or a time window corresponding to the third signaling;
in a case that the third signaling is not detected within the first time, determine at least one of the following: that connection to the second device fails, that the second signaling is not successfully received by the second device, and that the first device is not identified by the second device; or in a case that the third signaling is detected within the first time, determine, based on the third signaling, at least one of the following:
   whether the first device is successfully connected to the second device;
   whether the second signaling is successfully received by the second device; and
   whether the first device is identified by the second device; where
   the third signaling is signaling sent by the second device.

Optionally, the third signaling includes at least one of the following:
a preamble, device identification information, an acknowledgement ACK, scheduling information of DO-DTT, a sleep command, a negative acknowledgement NACK, scheduling information for rescheduling transmission of the second signaling, and a third backoff time; where
the ACK is used to indicate that the second signaling is correctly received; and
the NACK is used to indicate one of the following:
   demodulation failure of the second signaling;
   demodulation failure of the DO-DTT data carried in the second signaling; and
   failure to receive the DO-DTT data in the second signaling.

Optionally, in a first case, the first device determines that the connection to the second device is successful, or determines that the second signaling is successfully received by the second device, or determines that the first device is identified by the second device; or
in a second case, the first device determines that the connection to the second device fails, or determines that the second signaling is not successfully received by the second device, or determines that the first device is not identified by the second device;
the first case includes at least one of the following:
   the preamble included in the third signaling matches the preamble included in the second signaling; and
   the device identification information included in the third signaling matches the device identification information included in the second signaling; and
   the second case includes at least one of the following:
      the preamble included in the third signaling does not match the preamble included in the second signaling; and
      the device identification information included in the third signaling does not match the device identification information included in the second signaling.

Optionally, in a case that the connection to the second device is successful, the radio frequency unit 801 is further configured to perform at least one of the following:
receiving and demodulating, for the first device, second DT data, where the second DT data is DT data carried in the third signaling;
sending, for the first device, fourth signaling; and
monitoring, for the first device, fifth signaling within a second time, where the second time includes: a timer running time corresponding to the fifth signaling, or a time window corresponding to the fifth signaling; where
the fourth signaling includes at least one of the following:
   device identification information;
   DO-DTT data;
   data scheduled by the third signaling;
   a data amount of the first device;
   a channel state of the first device;
   a battery status of the first device;
   a sleep request; and
   indication information used to indicate that the first device will sleep.

Optionally, the DT data carried in the third signaling includes:
retransmission data of the DT data carried in the first signaling.

Optionally, the radio frequency unit 801 is further configured to at least one of the following:
in a case that the fifth signaling is detected within the second time, determine, based on the fifth signaling, whether the first device is identified by the second device;
in a case that the fifth signaling is detected within the second time, determine, based on the fifth signaling, whether conflict is successfully resolved;
in a case that the fifth signaling is not detected within the second time, determine that the first device is not identified by the second device; and
in a case that the fifth signaling is not detected within the second time, determine that conflict resolution fails.

Optionally, in a case that device identification information included in the fifth signaling matches the device identification information included in the fourth signaling, it is determined that the first device is identified by the second device, or that conflict resolution is successful; or
in a case that device identification information included in the fifth signaling does not match the device identification information included in the fourth signaling, it is determined that the first device is not identified by the second device, or that conflict resolution fails.

Optionally, the fifth signaling carries at least one of the following:
retransmission data of the DT data carried in the first signaling; and
retransmission data of the DT data carried in the third signaling.

Optionally, the radio frequency unit 801 is further configured to:
in a case that the connection to the second device fails, send the first signaling after a delay of a fourth backoff time; where
the fourth backoff time includes one of the following:
   a backoff time randomly selected between 0 and the third backoff time;
   a backoff time randomly selected between 0 and a second target time, where the second target time is 2^{t2}-1, and t2 represents the third backoff time;
   a backoff time randomly selected between 0 and a fifth backoff time; and
   a backoff time randomly selected between 0 and a third target time, where the third target time is 2^{t3}-1, and t3 represents the fifth backoff time; where
   the third backoff time is a backoff time indicated by the third signaling, and the fifth backoff time is a backoff time obtained by adding an offset to the second backoff time indicated by the first signaling.

The device can improve data transmission performance of the device.

It can be understood that for the implementation processes of the implementations mentioned in this embodiment, reference may be made to the related description in the foregoing data transmission method, with the same or corresponding technical effects achieved. To avoid repetition, details are not repeated herein.

An embodiment of this application further provides a device including a processor and a communication interface, where the communication interface is coupled to the processor, and the processor is configured to run a program or instructions to implement the steps of the method embodiment shown in FIG. 4. This device embodiment corresponds to the foregoing data transmission method embodiments, and each implementation process and implementation of the foregoing method embodiments are applicable to this device embodiment, with the same technical effect achieved.

An embodiment of this application further provides a device including a processor and a communication interface, where the communication interface is configured to send first signaling, where the first signaling is used to trigger DO-DTT, or the first signaling carries DT data; and receive second signaling, where the second signaling satisfies at least one of the following: a sending time of the second signaling is: a time indicated by the first signaling, or a time obtained after a delay of a first backoff time; the second signaling includes DO-DTT data; and the second signaling includes feedback on first DT data.

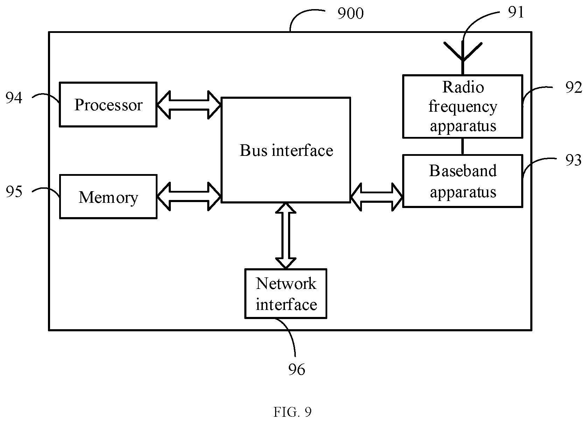

Specifically, an embodiment of this application further provides a device. As shown in FIG. 9, the device 900 includes: an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information through the antenna 91 and sends the received information to the baseband apparatus 93 for processing. In a downlink direction, the baseband apparatus 93 processes information to be sent and sends it to the radio frequency apparatus 92, and the radio frequency apparatus 92 processes the received information and sends it out through the antenna 91.

The data transmission method in the foregoing embodiments may be implemented in the baseband apparatus 93. The baseband apparatus 93 includes a baseband processor.

The baseband apparatus 93 may, for example, include at least one baseband board on which multiple chips are arranged, as shown in FIG. 9, where one chip, for example, a baseband processor, is connected to the memory 95 through a bus interface to call a program in the memory 95 and execute the network device operations shown in the above method embodiments.

The device may further include a network interface 96. The interface is, for example, a common public radio interface (Common Public Radio Interface, CPRI).

Specifically, the device 900 in the embodiment of this application further includes: instructions or a program stored in the memory 95 and capable of running on the processor 94, where the processor 94 calls the instructions or program in the memory 95 to execute the methods executed by the modules shown in FIG. 6, with the same technical effect achieved. To avoid repetition, details are not repeated herein.

In this embodiment, the device is a second device. Specifically, the second device being a network-side device is used as an example for illustration.

The radio frequency apparatus 92 sends first signaling, where the first signaling is used to trigger DO-DTT, or the first signaling carries DT data; and receives second signaling, where the second signaling satisfies at least one of the following:
a sending time of the second signaling is: a time indicated by the first signaling, or a time obtained after a delay of a first backoff time;
the second signaling includes DO-DTT data; and
the second signaling includes feedback on first DT data.

Optionally, the first signaling is used to trigger DO-DTT of one first device, or the first signaling carries DT data of one first device; or
the first signaling is used to trigger DO-DTT of at least one group of first devices, or the first signaling carries DT data of at least one group of first devices; or
the first signaling is used to trigger DO-DTT of all first devices covered by the second device, or the first signaling carries DT data of all first devices covered by the second device, where the second device is a device that sends the first signaling.

Optionally, the first signaling indicates the sending time of the second signaling, and the sending time of the second signaling is the time indicated by the first signaling; or
the first signaling indicates a second backoff time, and the sending time of the second signaling is a sending time obtained after a delay of the first backoff time, where the first backoff time includes one of the following:
a backoff time randomly selected between 0 and the second backoff time; and
a backoff time randomly selected between 0 and a first target time, where the first target time is 2^{t1}-1, and t1 represents the second backoff time.

Optionally, a resource for the second device to receive the second signaling includes one of the following:
a resource indicated by the first signaling; and
a network-side configured resource, where the network-side configured resource includes: a contention-based resource or a non-contention-based resource.

Optionally, the second signaling further includes at least one of the following:
a preamble, device identification information, a data amount of a first device, a channel state of the first device, and a battery status of the first device; where
the device identification information includes one of the following:
   device unique identification information, device group identification information, and identification information used to indicate all first devices covered by the second device, where the second signaling is signaling sent by the first device.

Optionally, the first DT data includes one of the following:
in a case that the first signaling triggers DO-DTT, DT data carried in the first signaling and related to the triggering of DO-DTT; and
in a case that the first signaling carries DT data, the DT data carried in the first signaling.

Optionally, the first DT data includes one of the following:
unicast DT data, multicast DT data, and broadcast DT data.

Optionally, after the second device receives the second signaling, the radio frequency apparatus 92 is further configured to:
send third signaling, where the third signaling is used to determine at least one of the following:
whether a first device is successfully connected to the second device;
whether the second signaling is successfully received by the second device; and
whether the first device is identified by the second device; where
the second signaling is signaling sent by the first device.

Optionally, the third signaling includes at least one of the following:
a preamble, device identification information, an acknowledgement ACK, scheduling information of DO-DTT, a sleep command, a negative acknowledgement NACK, scheduling information for rescheduling transmission of the second signaling, and a third backoff time; where
the ACK is used to indicate that the second signaling is correctly received; and
the NACK is used to indicate one of the following:
   demodulation failure of the second signaling;
   demodulation failure of the DO-DTT data carried in the second signaling; and
   failure to receive the DO-DTT data in the second signaling.

Optionally, after sending the third signaling, the radio frequency apparatus 92 is further configured to perform at least one of the following:
receiving fourth signaling; and
sending fifth signaling, where the fifth signaling is used to determine whether the first device is identified by the second device, or determine whether conflict is successfully resolved; where
the fourth signaling includes at least one of the following:
   device identification information;
   DO-DTT data;
   data scheduled by the third signaling;
   a data amount of the first device;
   a channel state of the first device;
   a battery status of the first device;
   a sleep request; and
   indication information used to indicate that the first device will sleep.

Optionally, DT data carried in the third signaling includes:
retransmission data of the DT data carried in the first signaling.

Optionally, the fifth signaling carries at least one of the following:
retransmission data of the DT data carried in the first signaling; and
retransmission data of the DT data carried in the third signaling.

The device can improve data transmission performance of the device.

It can be understood that for the implementation processes of the implementations mentioned in this embodiment, reference may be made to the related description in the foregoing method embodiments, with the same or corresponding technical effects achieved. To avoid repetition, details are not repeated herein.

An embodiment of this application further provides a readable storage medium, where the readable storage medium stores a program or instructions, and the program or instructions, when executed by a processor, implement the processes of the foregoing data transmission method embodiments, with the same technical effect achieved. To avoid repetition, details are not repeated herein.

The processor is a processor in the terminal described in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip, where the chip includes a processor and a communication interface, the communication interface is coupled to the processor, and the processor is configured to run a program or instructions to implement the processes of the foregoing data transmission method embodiments, with the same technical effect achieved. To avoid repetition, details are not repeated herein.

It should be understood that the chip mentioned in the embodiment of this application may also be referred to as a system-level chip, a system chip, a chip system, a system-on-chip chip, and the like.

An embodiment of this application further provides a computer program product, where the computer program product is stored in a storage medium, and the computer program product is executed by at least one processor to implement the processes of the foregoing data transmission method embodiments, with the same technical effect achieved. To avoid repetition, details are not repeated herein.

An embodiment of this application further provides a wireless communication system including: a first device and a second device, where the first device may be configured to perform the steps of the data transmission method on the first device side according to the embodiments of this application, and the second device may be configured to perform the steps of the data transmission method on the second device side according to the embodiments of this application.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiments may also be implemented by hardware. The computer software product is stored in a storage medium (such as a ROM, a RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A data transmission method, comprising:
receiving, by a first device, first signaling, wherein the first signaling is used to trigger device-originated device-terminated triggered DO-DTT data transmission, or the first signaling carries device-terminated DT data; and
sending, by the first device, second signaling, wherein the second signaling satisfies at least one of the following:
a sending time of the second signaling is: a time indicated by the first signaling, or a time obtained after a delay of a first backoff time;
the second signaling comprises DO-DTT data; and
the second signaling comprises feedback on first DT data.

2. The method according to claim 1, wherein the first signaling is used to trigger DO-DTT of one first device, or the first signaling carries DT data of one first device; or
the first signaling is used to trigger DO-DTT of at least one group of first devices, or the first signaling carries DT data of at least one group of first devices; or
the first signaling is used to trigger DO-DTT of all first devices covered by a second device, or the first signaling carries DT data of all first devices covered by the second device, wherein the second device is a device that sends the first signaling.

3. The method according to claim 1 or 2, wherein the first signaling indicates the sending time of the second signaling, and the sending time of the second signaling is the time indicated by the first signaling; or
the first signaling indicates a second backoff time, and the sending time of the second signaling is a time obtained after a delay of the first backoff time, wherein the first backoff time comprises one of the following:
a backoff time randomly selected between 0 and the second backoff time; and
a backoff time randomly selected between 0 and a first target time, wherein the first target time is 2^{t1}-1, and t1 represents the second backoff time.

4. The method according to any one of claims 1 to 3, wherein a resource for the first device to send the second signaling comprises one of the following:
a resource indicated by the first signaling; and
a network-side configured resource, wherein the network-side configured resource comprises: a contention-based resource or a non-contention-based resource.

5. The method according to any one of claims 1 to 4, wherein the second signaling further comprises at least one of the following:
a preamble, device identification information, a data amount of the first device, a channel state of the first device, and a battery status of the first device; wherein
the device identification information comprises one of the following:
device unique identification information, device group identification information, and identification information used to indicate all first devices covered by a second device, wherein the second device is a device that sends the first signaling.

6. The method according to any one of claims 1 to 5, wherein the first DT data comprises one of the following:
in a case that the first signaling triggers DO-DTT, DT data carried in the first signaling and related to the triggering of DO-DTT; and
in a case that the first signaling carries DT data, the DT data carried in the first signaling.

7. The method according to any one of claims 1 to 6, wherein the first DT data comprises one of the following:
unicast DT data, multicast DT data, and broadcast DT data.

8. The method according to any one of claims 1 to 7, wherein after the sending, by the first device, second signaling, the method further comprises:
monitoring, by the first device, third signaling within a first time, wherein the first time comprises: a timer running time corresponding to the third signaling, or a time window corresponding to the third signaling;
in a case that the third signaling is not detected within the first time, determining, by the first device, at least one of the following: that connection to the second device fails, that the second signaling is not successfully received by the second device, and that the first device is not identified by the second device; or in a case that the third signaling is detected within the first time, determining, by the first device based on the third signaling, at least one of the following:
whether the first device is successfully connected to the second device;
whether the second signaling is successfully received by the second device; and
whether the first device is identified by the second device; wherein
the third signaling is signaling sent by the second device.

9. The method according to claim 8, wherein the third signaling comprises at least one of the following:
a preamble, device identification information, an acknowledgement ACK, scheduling information of DO-DTT, a sleep command, a negative acknowledgement NACK, scheduling information for rescheduling transmission of the second signaling, and a third backoff time; wherein
the ACK is used to indicate that the second signaling is correctly received; and
the NACK is used to indicate one of the following:
demodulation failure of the second signaling;
demodulation failure of the DO-DTT data carried in the second signaling; and
failure to receive the DO-DTT data in the second signaling.

10. The method according to claim 9, wherein in a first case, the first device determines that the connection to the second device is successful, or determines that the second signaling is successfully received by the second device, or determines that the first device is identified by the second device; or
in a second case, the first device determines that the connection to the second device fails, or determines that the second signaling is not successfully received by the second device, or determines that the first device is not identified by the second device;
the first case comprises at least one of the following:
the preamble comprised in the third signaling matches the preamble comprised in the second signaling; and
the device identification information comprised in the third signaling matches the device identification information comprised in the second signaling; and
the second case comprises at least one of the following:
the preamble comprised in the third signaling does not match the preamble comprised in the second signaling; and
the device identification information comprised in the third signaling does not match the device identification information comprised in the second signaling.

11. The method according to any one of claims 8 to 10, wherein in a case that the connection to the second device is successful, the method further comprises at least one of the following:
receiving and demodulating, by the first device, second DT data, wherein the second DT data is DT data carried in the third signaling;
sending, by the first device, fourth signaling; and
monitoring, by the first device, fifth signaling within a second time, wherein the second time comprises: a timer running time corresponding to the fifth signaling, or a time window corresponding to the fifth signaling; wherein
the fourth signaling comprises at least one of the following:
device identification information;
DO-DTT data;
data scheduled by the third signaling;
a data amount of the first device;
a channel state of the first device;
a battery status of the first device;
a sleep request; and
indication information used to indicate that the first device will sleep.

12. The method according to any one of claim 11, wherein the DT data carried in the third signaling comprises:
retransmission data of the DT data carried in the first signaling.

13. The method according to claim 11 or 12, wherein the method further comprises at least one of the following:
in a case that the fifth signaling is detected within the second time, determining, based on the fifth signaling, whether the first device is identified by the second device;
in a case that the fifth signaling is detected within the second time, determining, based on the fifth signaling, whether conflict is successfully resolved;
in a case that the fifth signaling is not detected within the second time, determining that the first device is not identified by the second device; and
in a case that the fifth signaling is not detected within the second time, determining that conflict resolution fails.

14. The method according to claim 13, wherein in a case that device identification information comprised in the fifth signaling matches the device identification information comprised in the fourth signaling, it is determined that the first device is identified by the second device, or that conflict resolution is successful; or
in a case that device identification information comprised in the fifth signaling does not match the device identification information comprised in the fourth signaling, it is determined that the first device is not identified by the second device, or that conflict resolution fails.

15. The method according to claim 13 or 14, wherein the fifth signaling carries at least one of the following:
retransmission data of the DT data carried in the first signaling; and
retransmission data of the DT data carried in the third signaling.

16. The method according to any one of claims 8 to 15, wherein the method further comprises:
in a case that the connection to the second device fails, sending the first signaling after a delay of a fourth backoff time; wherein
the fourth backoff time comprises one of the following:
a backoff time randomly selected between 0 and the third backoff time;
a backoff time randomly selected between 0 and a second target time, wherein the second target time is 2^{t2}-1, and t2 represents the third backoff time;
a backoff time randomly selected between 0 and a fifth backoff time; and
a backoff time randomly selected between 0 and a third target time, wherein the third target time is 2^{t3}-1, and t3 represents the fifth backoff time; wherein
the third backoff time is a backoff time indicated by the third signaling, and the fifth backoff time is a backoff time obtained by adding an offset to the second backoff time indicated by the first signaling.

17. A data transmission method, comprising:
sending, by a second device, first signaling, wherein the first signaling is used to trigger device-originated device-terminated triggered data transmission DO-DTT, or the first signaling carries device-terminated DT data; and
receiving, by the second device, second signaling, wherein the second signaling satisfies at least one of the following:
a sending time of the second signaling is: a time indicated by the first signaling, or a time obtained after a delay of a first backoff time;
the second signaling comprises DO-DTT data; and
the second signaling comprises feedback on first DT data.

18. The method according to claim 17, wherein the first signaling is used to trigger DO-DTT of one first device, or the first signaling carries DT data of one first device; or
the first signaling is used to trigger DO-DTT of at least one group of first devices, or the first signaling carries DT data of at least one group of first devices; or
the first signaling is used to trigger DO-DTT of all first devices covered by the second device, or the first signaling carries DT data of all first devices covered by the second device, wherein the second device is a device that sends the first signaling.

19. The method according to claim 17 or 18, wherein the first signaling indicates the sending time of the second signaling, and the sending time of the second signaling is the time indicated by the first signaling; or
the first signaling indicates a second backoff time, and the sending time of the second signaling is a sending time obtained after a delay of the first backoff time, wherein the first backoff time comprises one of the following:
a backoff time randomly selected between 0 and the second backoff time; and
a backoff time randomly selected between 0 and a first target time, wherein the first target time is 2^{t1}-1, and t1 represents the second backoff time.

20. The method according to any one of claims 17 to 19, wherein a resource for the second device to receive the second signaling comprises one of the following:
a resource indicated by the first signaling; and
a network-side configured resource, wherein the network-side configured resource comprises: a contention-based resource or a non-contention-based resource.

21. The method according to any one of claims 17 to 20, wherein the second signaling further comprises at least one of the following:
a preamble, device identification information, a data amount of a first device, a channel state of the first device, and a battery status of the first device; wherein
the device identification information comprises one of the following:
device unique identification information, device group identification information, and identification information used to indicate all first devices covered by the second device, wherein the second signaling is signaling sent by the first device.

22. The method according to any one of claims 17 to 21, wherein the first DT data comprises one of the following:
in a case that the first signaling triggers DO-DTT, DT data carried in the first signaling and related to the triggering of DO-DTT; and
in a case that the first signaling carries DT data, the DT data carried in the first signaling.

23. The method according to claim 22, wherein the first DT data comprises one of the following: unicast DT data, multicast DT data, and broadcast DT data.

24. The method according to any one of claims 17 to 23, wherein after the receiving, by the second device, second signaling, the method further comprises:
sending, by the second device, third signaling, wherein the third signaling is used to determine at least one of the following:
whether a first device is successfully connected to the second device;
whether the second signaling is successfully received by the second device; and
whether the first device is identified by the second device; wherein
the second signaling is signaling sent by the first device.

25. The method according to claim 24, wherein the third signaling comprises at least one of the following:
a preamble, device identification information, an acknowledgement ACK, scheduling information of DO-DTT, a sleep command, a negative acknowledgement NACK, scheduling information for rescheduling transmission of the second signaling, and a third backoff time; wherein
the ACK is used to indicate that the second signaling is correctly received; and
the NACK is used to indicate one of the following:
demodulation failure of the second signaling;
demodulation failure of the DO-DTT data carried in the second signaling; and
failure to receive the DO-DTT data in the second signaling.

26. The method according to claim 24 or 25, wherein after the sending, by the second device, third signaling, the method further comprises at least one of the following:
receiving, by the second device, fourth signaling; and
sending, by the second device, fifth signaling, wherein the fifth signaling is used to determine whether the first device is identified by the second device, or determine whether conflict is successfully resolved; wherein
the fourth signaling comprises at least one of the following:
device identification information;
DO-DTT data;
data scheduled by the third signaling;
a data amount of the first device;
a channel state of the first device;
a battery status of the first device;
a sleep request; and
indication information used to indicate that the first device will sleep.

27. The method according to any one of claims 24 to 26, wherein DT data carried in the third signaling comprises:
retransmission data of the DT data carried in the first signaling.

28. The method according to claim 26 or 27, wherein the fifth signaling carries at least one of the following:
retransmission data of the DT data carried in the first signaling; and
retransmission data of the DT data carried in the third signaling.

29. A data transmission apparatus, comprising:
a first receiving module configured to receive first signaling, wherein the first signaling is used to trigger device-originated-device-terminated triggered data transmission DO-DTT, or the first signaling carries device-terminated DT data; and
a first sending module configured to send second signaling, wherein the second signaling satisfies at least one of the following:
a sending time of the second signaling is: a time indicated by the first signaling, or a time obtained after a delay of a first backoff time;
the second signaling comprises DO-DTT data; and
the second signaling comprises feedback on first DT data.

30. A data transmission apparatus, comprising:
a first sending module configured to send first signaling, wherein the first signaling is used to trigger device-originated-device-terminated triggered data transmission DO-DTT, or the first signaling carries device-terminated DT data; and
a first receiving module configured to receive second signaling, wherein the second signaling satisfies at least one of the following:
a sending time of the second signaling is: a time indicated by the first signaling, or a time obtained after a delay of a first backoff time;
the second signaling comprises DO-DTT data; and
the second signaling comprises feedback on first DT data.

31. A device, comprising a processor and a memory, wherein the memory stores a program or instructions capable of running on the processor, and the program or instructions, when executed by the processor, implement the steps of the data transmission method according to any one of claims 1 to 16, or the program or instructions, when executed by the processor, implement the steps of the data transmission method according to any one of claims 17 to 28.

32. A readable storage medium, wherein the readable storage medium stores a program or instructions, and the program or instructions, when executed by a processor, implement the steps of the data transmission method according to any one of claims 1 to 16, or implement the steps of the data transmission method according to any one of claims 17 to 28.
